# EUROPÄISCHE PATENTSCHRIFT

(11) **EP 1 061 277 B1**
(45) Veröffentlichungstag und Bekanntmachung des Hinweises auf die Patenterteilung: **15.11.2006**
(21) Anmeldenummer: 00810383.0
(22) Anmeldetag: 04.05.2000
(51) Int. Cl.: F21V 21/14, F16L 3/00

(54) **Abhängevorrichtung**
Hanging device
Dispositif de fixation

(30) Priorität: 17.06.1999 DE 19927690
(43) Veröffentlichungstag der Anmeldung: 20.12.2000
(73) Patentinhaber: HILTI Aktiengesellschaft, 9494 Schaan (LI)
(72) Erfinder: Korten, Gerd, 80634 München (DE)
(74) Vertreter: Wildi, Roland

(56) Entgegenhaltungen:
- US-A- 4 193 571

## Beschreibung

Die Erfindung betrifft eine Abhängevorrichtung, insbesondere zur Abhängung von Rohren, Rohrleitungs- und Kabeltrassen oder dergleichen, gemäss dem Oberbegriff des Patentanspruchs 1.

Heizungsrohre, Kabel, Lüftungsrohre und dergleichen werden vielfach in einem Abstand von der Decke geführt. Dazu sind sie in speziellen Halterungen gelagert, die über Abhängevorrichtungen von der Decke abgehängt sind. Diese Halterungen können Rohrschellen, Rohrleitungs- oder Kabeltrassen oder dergleichen sein. Eine aus dem deutschen Gebrauchsmuster Nr. 1 794 488 bekannte Abhängevorrichtung umfasst zwei gewindestangenartige Teilstücke, die axial untereinander angeordnet und durch ein hülsenförmiges Zwischenkupplungsstück miteinander verbunden sind. Ein erstes Teilstück weist an seinem einen Ende ein kugelförmiges Element auf, das innerhalb des Zwischenkupplungsstücks angeordnet ist. Der axial gegenüberliegende Endabschnitt des Zwischenkupplungsstücks ist mit einer Gewindebuchse ausgestattet, in die das zweite gewindestangenartige Teilstück einschraubbar ist. Die Gewindebuchse erlaubt eine Höhenverstellung des ansonsten starr angebundenen zweiten Teilstücks. Das mit dem kugelförmigen Element versehene erste Teilstück bildet in Verbindung mit dem die Kugel umschliessenden Zwischenkupplungsstück ein Kugelgelenk, das eine gewisse pendelnde Beweglichkeit der beiden Teile zueinander erlaubt. Die dem Zwischenkupplungsstück abgewandten Enden der beiden Teilstücke dienen zur Anbindung an die Decke oder an eine an der Decke montierte Montageschiene bzw. zur Befestigung einer Halterung für Rohre, Kabel oder dergleichen.

Insbesondere bei der Befestigung von Rohrleitungen für Medien, deren Temperatur wechselt, muss der Ausdehnung der Rohre in axialer Richtung Rechnung getragen werden. Für Rohrleitungstrassen, die Richtungsänderungen aufweisen, sind auch Bewegungen quer zur Rohrleitungsachse zu berücksichtigen. Um alle diese Anforderungen hinsichtlich der Beweglichkeit der Abhängung zu erfüllen, werden die bekannten Abhängevorrichtungen immer paarweise untereinander montiert. Diese Anordnung weist jedoch den Nachteil einer sehr grossen Bauhöhe auf. Die Verwendung nur eines Abhängeelements in Verbindung mit einem Roll- oder Schiebegleiter verringert zwar die erforderliche Bauhöhe. Jedoch wird dadurch der Befestigungspunkt übermässig verteuert. Zudem können Roll- oder Schiebegleiter keine Querbewegungen der abgehängten Bauteile aufnehmen.

Dokument US 4 193 571 offenbart eine Abhängevorrichtung gemäß dem Oberbegriff von Anspruch 1.

Aufgabe der vorliegenden Erfindung ist es daher, eine Abhängevorrichtung zu schaffen, die eine allseitige Beweglichkeit aufweist. Die Abhängevorrichtung soll insbesondere eine geringe Bauhöhe aufweisen, um auch in Bereichen mit nur geringem Einbauraum einsetzbar zu sein. Für eine schnelle und einfache Montage soll auch eine Höhenverstellbarkeit gegeben sein. Die Abhängevorrichtung soll einfach und kostengünstig in der Herstellung sein und in gewohnter Weise montierbar sein.

Die Lösung dieser Aufgaben besteht in einer Abhängevorrichtung mit den im kennzeichnenden Abschnitt des Patentanspruchs 1 angeführten Merkmalen. Bevorzugte Ausführungsvarianten und/oder Weiterbildungen der Erfindung sind Gegenstand der abhängigen Patentansprüche. Die erfindungsgemässe Abhängevorrichtung umfasst ein erstes und ein zweites, längliches Teilstück, die im wesentlichen in axialer Verlängerung untereinander angeordnet sind und über ein Zwischenkupplungsstück miteinander verbunden sind. Die Verbindung ist derart, dass die Teilstücke relativ zueinander beweglich sind. Das erste längliche Teilstück ist stiftartig ausgebildet und ragt von einer Deckplatte des im wesentlichen senkrecht dazu verlaufenden, etwa hülsenförmig ausgebildeten Zwischenkupplungstücks ab. Das zweite Teilstück ist durch eine Querbohrung eines länglichen Stabes geführt, der sich in Längsrichtung des Zwischenkupplungsstücks erstreckt. Der längliche Stab stützt sich an dem Zwischenkupptungsstück ab und ist gegenüber diesem beweglich. Das zweite Teilstück stützt sich am länglichen Stab ab.

Die erfindungsgemässe Abhängevorrichtung weist alle zur Erfüllung der geforderten Beweglichkeiten notwendigen Bewegungsfreiheitsgrade auf. Das zweite längliche Teilstück ist gegenüber dem Zwischenkupplungsstück verschwenkbar und kann durch die Relatiwerschiebbarkeit zwischen dem länglichen Stab und dem hülsenförmigen Zwischenkupplungsstück auch Querkräfte aufnehmen. Dabei weist die Abhängevorrichtung eine sehr niedrige Bauhöhe auf, die seine universelle Einsetzbarkeit noch unterstreicht. Auf teure und aufwendig konstruierte Roll- und Gleitelemente kann verzichtet werden. Die Abhängevorrichtung umfasst nur wenige, einfach standardisierbare Bauteile, was den Aufwand für die Herstellung weiter verringert. In der Montage stellt die erfindungsgemässe Abhängevorrichtung keine erhöhten Anforderungen an das Montagepersonal. Sie kann in gewohnter Weise wie die aus dem Stand der Technik bekannten Abhängevorrichtungen mit einer Halterung für Rohre oder dergleichen verbunden und an der Decke oder an einer an der Decke vorgesehenen Montageschiene befestigt werden.

Eine besonders einfache Ausführungsvariante, die den üblichen Montagegewohnheiten entgegenkommt, weist ein erstes Teilstück auf, das als Gewindestift ausgebildet ist. Der Gewindestift ist mit einem Aussengewinde versehen, der eine Anbindung an korrespondierende Bauteile erlaubt, die an der Decke oder an einer an der Decke montierten Montageschiene vorgesehen sind.

Indem das zweite längliche Teilstück als Innengewindehülse ausgebildet ist, verringert sich der Abstand, in dem beispielsweise ein Rohr von der Decke abgehängt ist, noch weiter. Die Halterung für das Rohr, beispielsweise eine Rohrschelle wird mit ihrer Gewindestange in die Gewindehülse eingeschraubt. Das Innengewinde der Gewindehülse erlaubt eine einfache Höhenverstellung der Halterung. Die Innengewindehülse ist an ihrem innerhalb des Zwischenkupplungsstücks gelagerten Ende vorzugsweise wenigstens teilweise geschlossen ausgebildet, um zu verhindern, dass die in die Gewindehülse eingedrehte Gewindestange aus der Gewindehülse ragt und die Verschwenkbarkeit der Gewindehülse behindert.

In einer Variante der Erfindung ist der längliche Stab ein Zylinderstab, der eine gestufte Querbohrung aufweist, in der sich das mit einem Bund versehene zweite Teilstück abstützt. Der Zylinderstab ist gegenüber dem Zwischenkupplungsstück nicht nur in axialer Richtung verschiebbar, sondern er ist auch um seine Achse begrenzt verdrehbar bzw. verschwenkbar. Dadurch ist die Beweglichkeit der Abhängevorrichtung noch weiter vergrössert. Bei einer Längsbewegung beispielsweise eines abgehängten Rohres für Heisswasser nimmt der axiale Freiheitsgrad des Zylinderstifts die Längenausdehnung des Rohres auf. Bei einer zusätzlichen Querbewegung kann sich der Zylinderstift innerhalb des hülsenförmigen Zwischenkupplungsstücks verdrehen. Die Lagerung des zweiten Teilstücks im Zylinderstab ist dabei vorzugsweise derart gewählt, dass eine Verdrehbarkeit des zweiten Teilstücks um seine Achse erhalten bleibt.

In einer alternativen Ausführungsform der Abhängevorrichtung ist der längliche Stab ein Vierkantstab, dessen Querbohrung mit einer kalottenartigen Ansenkung versehen ist, in der sich das mit einer aufgestauchten Kalotte versehene zweite Teilstück abstützt. Die Verschwenkbarkeit des zweiten Teilstücks gegenüber dem hülsenförmigen Zwischenkupplungsstück kann durch eine Verdrehbarkeit des Vierkantstabs um seine Achse realisiert sein. Mit Vorteil ist jedoch das zweite Teilstück gegenüber dem länglichen Vierkantstab verschwenkbar angeordnet. Dazu weist die Bohrung gegenüber dem zweiten Teilstück ein Übermass auf. Das Übermass gibt dann die Grenzen der Verschwenkbarkeit vor. In einer alternativen Variante der Erfindung erweitert sich die Querbohrung im Vierkantstab auf seiner der Ansenkung abgewandten Seite etwa konisch, um ein möglichst grosses Ausschwenkmass des durch die Querbohrung geführten zweiten Teilstücks zu ermöglichen. Die verschwenkbare Lagerung des zweiten Teilstücks kann auch bei einer Ausführungsvariante mit einem Zylinderstab vorgesehen sein, um die Beweglichkeit der Abhängevorrichtung noch weiter zu erhöhen.

Bei einer besonders einfachen und kostengünstig herstellbaren Variante der Erfindung ist das hülsenförmige Zwischenstück als Drahtkäfig ausgebildet. Der Drahtkäfig umfasst zwei baugleiche Bügelhälften, die durch die Deckplatte miteinander verbunden sind.

Das erste Teilstück wurde insbesondere als Gewindestift geschildert, der von der Deckplatte des Zwischenkupplungsstücks abragt. Der Gewindestift kann mit der Deckplatte beispielsweise durch Schweissen permanent verbunden sein. In alternativen Ausführungsvarianten kann der Gewindestift lösbar mit der Deckplatte verbunden sein. Dazu ist an der Deckplatte beispielsweise eine Einschraubmutter angeordnet, in die der Gewindestift einschraubbar ist. Die Deckplatte kann ein separates Flanschteil sein oder unmittelbar von der Einschraubmutter gebildet sein.

Im folgenden wird die Erfindung unter Bezugnahme auf in den Figuren dargestellte Ausführungsbeispiele näher erläutert. Es zeigen in schematischer, nicht massstabsgetreuer Darstellung:
- Fig. 1: eine teilweise geschnittene Seitenansicht eines ersten Ausführungsbeispiels der erfindungsgemässen Abhängevorrichtung;
- Fig. 2: eine Draufsicht des Ausführungsbeispiels gemäss Fig. 1;
- Fig. 3: ein zweites Ausführungsbeispiel der Abhängevorrichtung in einer Darstellung gemäss Fig. 1; und
- Fig. 4: einen Axialschnitt der Abhängevorrichtung aus Fig. 3 gemäss Schnittlinie IV-IV.

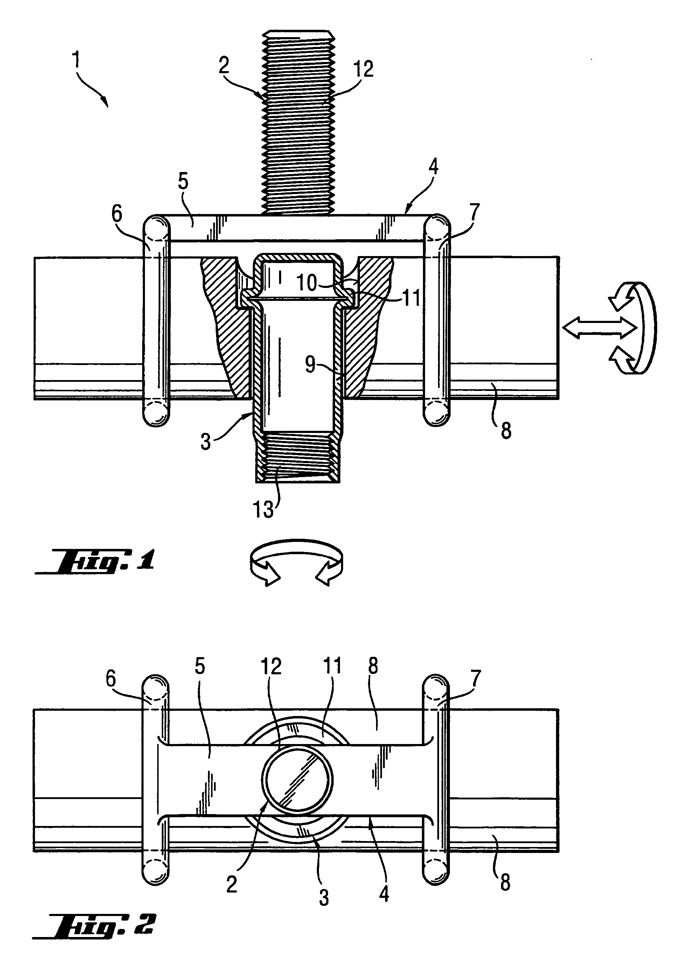

Das in Fig. 1 und 2 dargestellte Ausführungsbeispiel der Abhängevorrichtung trägt gesamthaft das Bezugszeichen 1. Es umfasst ein erstes Teilstück 2, welches als Gewindestift mit einem Aussengewinde 12 ausgebildet ist, und ein zweites Teilstück 3, das von einer Gewindehülse mit einem Innengewinde 13 gebildet ist. Das erste und das zweite Teilstück 2, 3 sind etwa in axialer Verlängerung untereinander angeordnet und über ein Zwischenkupplungsstück 4 miteinander verbunden. Gemäss dem dargestellten Ausführungsbeispiel umfasst das Zwischenkupplungsstück 4 zwei Drahtbügel 6, 7, die über eine Deckplatte 5 miteinander verbunden sind. Der Gewindestift 2 ragt von der Aussenseite der Deckplatte 5 ab. Er kann beispielsweise durch Schweissen fest mit der Deckplatte 5 verbunden sein oder in einer Einschraubmutter lösbar fixiert sein. Die Einschraubmutter kann an der Aussenseite der Deckplatte befestigt sein oder selbst die Deckplatte bilden. Das Zwischenkupplungsstück kann beispielsweise auch hülsenförmig geschlossen ausgebildet sein und an der dem Gewindestift abgewandten Seite eine Durchtrittsöffnung aufweisen.

Durch die beiden kreisförmig gebogenen Drahtbügel 6, 7 ist ein länglicher Stab 8 geführt, der sich an den beiden Drahtbügeln 6, 7 abstützt. Der längliche Stab 8 ist als Zylinderstab ausgebildet und mit einer gestuften Querbohrung 9, 10 versehen, durch welche die Gewindehülse 3 geführt ist. Die Gewindehülse 3 ist an ihrem innerhalb des Zwischenkupplungsstücks 4 angeordneten Endbereich mit einem, beispielsweise angestauchten, Bund 11 versehen, der sich in der Erweiterung 10 der gestuften Querbohrung 9, 10 abstützt. Das innerhalb des Zwischenkupplungsstücks 4 angeordnete Stirnende der Gewindehülse 3 ist wenigstens zum Teil geschlossen ausgebildet. Auf diese Weise wird verhindert, dass eine in das Innengewinde 13 der Gewindehülse eingeschraubte Gewindestange die Stirnseite der Gewindehülse 3 überragt und die Beweglichkeit der im Zwischenkupplungsstück 4 gelagerten Gewindehülse 3 beeinträchtigt.

Die Gewindehülse weist mehrere Bewegungsfreiheitsgrade auf. Einerseits ist sie zusammen mit dem Zylinderstab 8 in dessen axialer Richtung verschiebbar. Die axiale Verschiebbarkeit wird durch die Drahtbügel 6, 7 begrenzt. Die Gewindehülse 3 ist auch gemeinsam mit dem Zylinderstab 8 um dessen Achse verdrehbar. Im vorliegenden Ausführungsbeispiel ist die Verdrehbarkeit bzw. Verschwenkbarkeit sehr gross und nur durch die abragende Gewindehülse 3 begrenzt, wenn diese schliesslich an der die Drahtbügel 6, 7 verbindenden Deckplatte 5 anstösst. Im Fall eines als geschlossene Hülse ausgebildeten Zwischenkupplungsstücks ist die Verschwenkbarkeit der Gewindehülse durch die Grösse des Fensters begrenzt, das in der Wandung der Hülse ausgespart ist. Schliesslich ist die Gewindehülse 3 auch noch gegenüber dem Zylinderstab 8 um ihre eigene Achse verdrehbar.

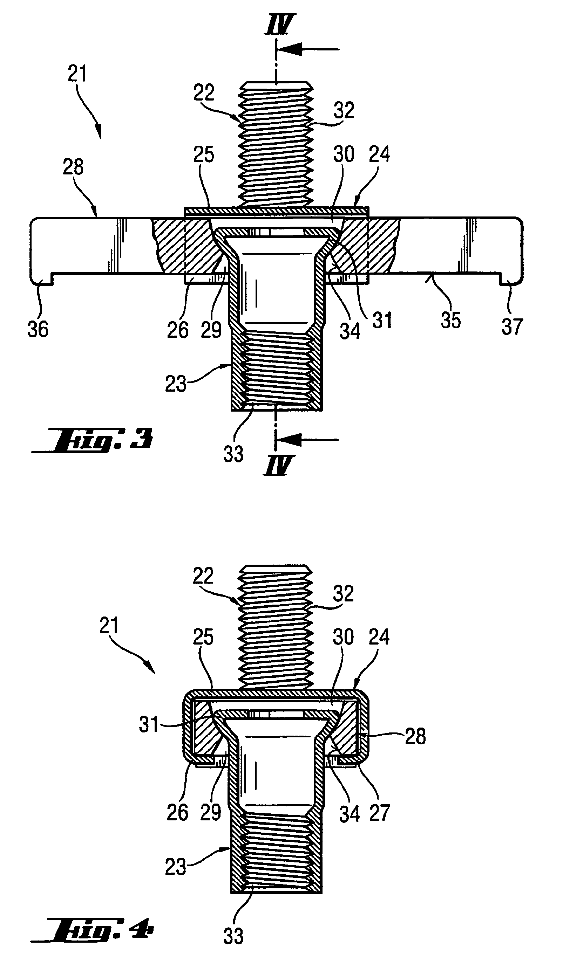

Das in Fig. 3 und 4 dargestellte Ausführungsbeispiel der Abhängevorrichtung ist gesamthaft mit dem Bezugszeichen 21 versehen. Es umfasst wiederum ein als Gewindestift mit einem Aussengewinde 32 versehenes erstes Teilstück 22, das über ein Zwischenkupplungsstück 24 mit einem zweiten Teilstück 23 verbunden ist, welches als Gewindehülse ausgebildet ist und ein Innengewinde 33 aufweist. Der Gewindestift 22 ragt von einer Deckplatte 25 des Zwischenkupplungsstücks 24 ab. Entlang der beiden Längsseiten der Deckplatte 5 erstrecken sich Seitenteile 26, 27, deren freie Ränder etwa rechtwinkelig aufeinander zu gebogen sind. Das Zwischenkupplungsstück 24 weist dadurch etwa die Form eines Montageschienenstücks mit C-förmigem Querschnitt auf. Innerhalb des C-förmigen Zwischenkupplungsstücks 24 ist ein Vierkantstab 28 gehalten, der sich an den aufeinander zu gebogenen freien Rändern der Seitenteile 26, 27 abstützt. Der Vierkantstab 28 ist mit seitlichen Führungen 35 und mit Endanschlägen 36, 37 versehen, welche seine axiale Verschiebbarkeit relativ zum Zwischenkupplungsstück 24 begrenzen. Der Vierkantstab 38 ist mit einer Querbohrung 29 versehen, durch welche die Gewindehülse 23 geführt ist. An ihrem in Nachbarschaft zur Deckplatte 25 liegenden Mündungsbereich besitzt die Querbohrung 29 eine kalottenartige Ansenkung 30. Der innerhalb des Zwischenkupplungsstücks 24 angeordnete Endabschnitt der Gewindehülse 23 ist mit einer aufgestauchten Kalotte 31 versehen, über die sich die Gewindehülse 23 am Vierkantstab 28 abstützt.

Die Bewegungsfreiheitsgrade der Gewindehülse 23 entsprechen weitgehend den Bewegungsfreiheitsgraden des Ausführungsbeispiels gemäss Fig. 1 und 2. Da der Vierkantstab 28 in dem C-förmig ausgebildeten Zwischenkupplungsstück nicht verdrehbar ist, wird die Verschwenkbarkeit der Gewindehülse 23 durch eine spezielle Ausbildung der Querbohrung 29 gewährleistet. Dazu ist die Querbohrung 29 an ihrer der kalottenartigen Ansenkung 30 gegenüberliegenden Mündung mit einer konischen Erweiterung 34 versehen. Durch die konische Erweiterung 34 an der Mündung der Querbohrung 29 ist die Gewindehülse 23 wiederum gegenüber dem Vierkantstab 28 verschwenkbar. Es versteht sich, dass auch bei dem Ausführungsbeispiel gemäss Fig. 3 und 4 die Gewindehülse um ihre Achse rotierbar ist. Die innerhalb des C-förmigen Zwischenkupplungsstücks 24 angeordnete Stirnseite der Gewindehülse 23 ist wiederum wenigstens teilweise geschlossen ausgebildet, um zu verhindern, dass eine angeschlossene Gewindestange zu weit eingedreht wird.

Die beispielhaft beschriebenen Varianten der erfindungsgemässen Abhängevorrichtungen sind in gewohnter Weise an der Decke oder an einer an der Decke montierten Montageschiene anbindbar. Beispielsweise wird dazu der Gewindestift in eine korrespondierende Aufnahme eingeschraubt. Die Gewindehülse ist zur Aufnahme einer Gewindestange ausgebildet, die beispielsweise mit einer Rohrschelle oder einer Halterung für eine Rohrleitungs- bzw. Kabeltrasse verbunden sein kann. Die Höhenverstellung erfolgt einfach durch mehr oder weniger weites Einschrauben der Gewindestange in die Gewindehülse. Während die Erfindung am Beispiel einer Abhängevorrichtung mit einer Gewindehülse erläutert worden ist, versteht es sich, dass an Stelle der Gewindehülse auch beispielsweise eine entsprechend ausgebildete Gewindestange als zweites Teilstück vorgesehen sein kann. Die Gewindestange kann mit einem Aussengewinde versehen sein oder auch andersartig ausgebildete Anbindemöglichkeiten aufweisen. Die Wahl der ersten und zweiten Teilstücke vermag an der grundsätzlichen Anordnung der Bestandteile der erfindungsgemässen Abhängevorrichtung nichts zu ändern.

## Patentansprüche

1. Abhängevorrichtung mit einem ersten und einem zweiten, länglichen Teilstück (2, 3; 22, 23), die im wesentlichen in axialer Verlängerung untereinander angeordnet sind und über ein Zwischenkupplungsstück (4; 24) relativ zueinander beweglich miteinander verbunden sind, wobei das erste längliche Teilstück (2; 22) stiftartig ausgebildet ist und von einer Deckplatte (5; 25) des im wesentlichen senkrecht dazu verlaufenden, hülsenförmig ausgebildeten Zwischenkupplungstücks (4; 24) abragt, **dadurch gekennzeichnet, dass** das zweite Teilstück (3; 23) durch eine Querbohrung (9; 29) eines länglichen Stabes (8; 28) geführt ist, der sich in Längsrichtung des hülsenförmigen Zwischenkupplungsstücks (4; 24) erstreckt, sich an diesem abstützt und gegenüber dem Zwischenkupplungsstück (4; 24) beweglich ist, und dass sich das zweite Teilstück (3; 23) am länglichen Stab (8; 28) abstützt.

2. Abhängevorrichtung nach Anspruch 1, **dadurch gekennzeichnet, dass** das erste Teilstück (2; 22) ein Gewindestift mit einem Aussengewinde (12; 32) ist.

3. Abhängevorrichtung nach Anspruch 1 oder 2, **dadurch gekennzeichnet, dass** das zweite längliche Teilstück (3; 23) eine Gewindehülse mit einem Innengewinde (13; 33) ist.

4. Abhängevorrichtung nach einem der vorangehenden Ansprüche, **dadurch gekennzeichnet, dass** der längliche Stab (8) ein Zylinderstab ist und eine gestufte Querbohrung (9, 10) aufweist, in der sich das mit einem Bund (11) versehene zweite Teilstück (3) abstützt.

5. Abhängevorrichtung nach einem der Ansprüche 1 - 3, **dadurch gekennzeichnet, dass** der längliche Stab (28) ein Vierkantstab ist, dessen Querbohrung (29) mit einer kalottenartigen Ansenkung (30) versehen ist, in der sich das mit einer aufgestauchten Kalotte (31) versehene zweite Teilstück (23) abstützt.

6. Abhängevorrichtung nach Anspruch 5, **dadurch gekennzeichnet, dass** das zweite Teilstück (3; 23) gegenüber dem länglichen Stab (8; 28) verschwenkbar angeordnet ist.

7. Abhängevorrichtung nach einem der vorangehenden Ansprüche, **dadurch gekennzeichnet, dass** das hülsenförmige Zwischenkupplungsstück (4) als Drahtkäfig ausgebildet ist und zwei Bügelhälften (6, 7) umfasst, die durch die Deckplatte (5) miteinander verbunden sind.

## Claims

1. Hanging device with first and second elongate components (2, 3; 22, 23) that are arranged substantially in line one below the other and are interconnected movably relative to each other by an intermediate coupling piece (4; 24), wherein the first elongate component (2; 22) is stud-like in form and projects from a cover plate (5; 25) of the intermediate coupling piece (4; 24) formed as a sleeve and extending substantially perpendicularly thereto, **characterized in that** the second component (3; 23) is led through a transverse bore (9; 29) in an elongate bar (8; 28) extending in the longitudinal direction of the sleeve-form intermediate coupling piece (4; 24) and supported thereon and movable with respect to the intermediate coupling piece (4; 24), and **in that** the second component (3; 23) is supported on the elongate bar (8; 28).

2. Hanging device according to Claim 1, **characterized in that** the first component (2; 22) is a screwed stud with a male thread (12; 32).

3. Hanging device according to Claim 1 or Claim 2, **characterized in that** the second elongate component (3; 23) is a screwed sleeve with a female thread (13; 33).

4. Hanging device according to any one of the preceding claims, **characterized in that** the elongate bar (8) is a round bar and has a stepped transverse bore (9, 10) in which the second component (3), which is provided with a collar (11), is supported.

5. Hanging device according to any one of Claims 1 - 3, **characterized in that** the elongate bar (28) is a rectangular bar whose transverse bore (29) is provided with a bowl-shaped countersunk recess (30) in which the second component (23), which is provided with an upset countersunk head (31), is supported.

6. Hanging, device according to Claim 5, **characterized in that** the second component (3; 23) is arranged tiltably with respect to the elongate bar (8; 28).

7. Hanging device according to any one of the preceding claims, **characterized in that** the sleeve-form intermediate coupling piece (4) is configured as a wire cage and comprises two half-hoops (6, 7) interconnected by the cover plate (5).

## Revendications

1. Dispositif de suspension avec une première et une seconde pièce partielle allongée (2, 3 ; 22, 23) qui sont disposées l'une au-dessous de l'autre sensiblement dans le prolongement axial l'une de l'autre et sont reliées entre elles de manière mobile l'une par rapport à l'autre par l'intermédiaire d'une pièce d'accouplement intermédiaire (4 ; 24), la première pièce partielle allongée (2 ; 22) étant conformée en tige et dépassant d'une plaque de recouvrement (5 ; 25) de la pièce d'accouplement intermédiaire (4 ; 24) qui est conformée en manchon et qui s'étend sensiblement perpendiculairement à elle, **caractérisé en ce que** la seconde pièce partielle (3 ; 23) traverse un trou transversal (9 ; 29) d'une barre allongée (8 ; 28), laquelle s'étend dans la direction longitudinale de la pièce d'accouplement intermédiaire en forme de manchon (4 ; 24), prend appui sur celle-ci et est mobile par rapport à la pièce d'accouplement intermédiaire (4 ; 24), et **en ce que** la seconde pièce partielle (3 ; 23) prend appui sur la barre allongée (8 ; 28).

2. Dispositif de suspension selon la revendication 1, **caractérisé en ce que** la première pièce partielle (2 ; 22) est une tige filetée avec un filetage extérieur (12 ; 32).

3. Dispositif de suspension selon la revendication 1 ou 2, **caractérisé en ce que** la seconde pièce partielle allongée (3 ; 23) est un manchon fileté avec un filetage intérieur (13 ; 33).

4. Dispositif de suspension selon une des revendications précédentes, **caractérisé en ce que** la barre allongée (8) est une barre cylindrique et est pourvue d'un trou transversal étagé (9, 10) dans lequel prend appui la seconde pièce partielle (3) munie d'un collet (11).

5. Dispositif de suspension selon une des revendications 1 à 3, **caractérisé en ce que** la barre allongée (28) est une barre quadrangulaire dont le trou transversal (29) est pourvu d'un chanfrein en forme de calotte (30) dans lequel prend appui la seconde pièce partielle (23) pourvue d'une calotte refoulée (31).

6. Dispositif de suspension selon la revendication 5, **caractérisé en ce que** la seconde pièce partielle (3 ; 23) est montée avec une possibilité de déplacement par rapport à la barre allongée (8 ; 28).

7. Dispositif de suspension selon une des revendications précédentes, **caractérisé en ce que** la pièce d'accouplement intermédiaire en forme de manchon (4) est conformée en cage de fil métallique et comporte deux demi-étriers (6, 7) qui sont reliés entre eux par l'intermédiaire de la plaque de recouvrement (5).
